# DEMANDE DE BREVET EUROPEEN

(11) **EP 1 329 609 A1**
(43) Date de publication de la demande: **23.07.2003**
(21) Numéro de dépôt: 03290102.7
(22) Date de dépôt: 15.01.2003
(51) Int. Cl.: F01N 7/18, F16L 51/02, F16L 27/10, F01N 7/14

(54) **Perfectionnement à un flexible de découplage pour ligne d'échappement d'un moteur de véhicule automobile**

(30) Priorité: 22.01.2002 FR 0200738
(71) Demandeur: HUTCHINSON, 75008 Paris (FR)
(72) Inventeur: Girot, Claire, 77630 Barbizon (FR); Ciolczyk, Jean-Pierre, 45200 Montargis (FR)
(74) Mandataire: Doireau, Marc

(57) **Abrégé**

Flexible de découplage (1) destiné à être monté dans une ligne d'échappement (11) d'un moteur de véhicule automobile, ce flexible (1) comprenant notamment une partie mécanique interne (A) assurant le guidage du flux des gaz d'échappement au travers du flexible (1), une partie étanchéité (B) formant une enveloppe externe étanche aux gaz d'échappement, une partie intermédiaire (C) formant une isolation thermique, et des moyens pour raccorder les extrémités des parties interne (A) et externe (B) du flexible (1) à la ligne d'échappement (11), caractérisé en ce que la partie mécanique interne (A) du flexible (1) est constituée par une pièce métallique tubulaire sous la forme d'un agrafé métallique (3) à double agrafage très lâche.

## Description

L'invention concerne un flexible de découplage qui est monté dans une ligne d'échappement d'un moteur de véhicule automobile.

D'une manière générale, une ligne d'échappement d'un moteur de véhicule automobile est montée en sortie du collecteur d'échappement du moteur. Cette ligne comprend généralement un ou plusieurs "pots" (catalytique, de détente, acoustique) constituant autant de masses le long d'une tubulure en un ou plusieurs morceaux rigidement raccordés. L'ensemble, suspendu à la caisse du véhicule par des liaisons modérément souples qui sont formées par des sangles ou des plots de suspension généralement à base d'élastomère, doit supporter les débattements du moteur liés à des accélérations verticales, aux changements brutaux de vitesse, aux dilatations thermiques, aux tolérances de montage,...

Pour ces raisons, une ligne d'échappement comprend le plus souvent un raccord tubulaire souple dénommé "flexible de découplage" qui évite la détérioration ou la destruction de la ligne d'échappement par les différentes sollicitations précitées. Ce flexible permet d'obtenir la souplesse nécessaire au découplage vibratoire du moteur par rapport à la ligne d'échappement d'une part et à la caisse d'autre part, et améliore le confort dans l'habitacle du véhicule.

D'une manière générale, le flexible doit supporter le flux de gaz chauds qui peut atteindre voire dépasser 900°C en continu et les conditions extérieures auxquelles la ligne d'échappement est soumise. Par contre, le flexible ne doit pas perturber le fonctionnement de certains éléments de la ligne d'échappement, en particulier pour les motorisations à essence, il doit interdire toute entrée d'air dans le catalyseur.

On connaît du document FR-A-2 796 416 un flexible de découplage qui comprend notamment une partie mécanique interne apte à assurer le guidage du flux des gaz d'échappement au travers du flexible, une partie étanchéité formant une enveloppe externe continue, fermée et étanche, et une partie intermédiaire d'isolation thermique intercalée entre les parties mécanique et étanchéité du flexible. L'enveloppe externe formant la partie étanchéité est scindée en une zone centrale souple qui est réalisée dans un matériau thermiquement résistant, et en deux zones d'extrémité rigides sous la forme de coiffes métalliques autour desquelles peuvent être rapportées des ailettes de refroidissement.

On connaît également des flexibles qui sont constitués par des tubes en tôle d'acier inoxydable de 0,3mm à 0,5mm, la tôle étant ondulée en forme de gainage interne et une tresse ou tricot externe. Cependant, de tels flexibles sont raides avec des modes vibratoires marqués et bruyants. En outre, ils ne supportent aucune tension, aucune torsion et aucun dépassement de déformation admissibles en flexion, en cisaillement ou en compression.

Un but de l'invention est de prendre en compte d'une manière plus concrète les contraintes dynamiques exercées sur un flexible de découplage afin d'obtenir un découplage total pour que le flexible présente une raideur dynamique faible et sensiblement constante sur toute la plage de fréquences des sollicitations mécaniques auxquelles il est soumis.

A cet effet, l'invention propose un flexible de découplage destiné à être monté dans une ligne d'échappement d'un moteur de véhicule automobile, ce flexible comprenant notamment une partie mécanique interne assurant le guidage du flux des gaz d'échappement au travers du flexible, une partie étanchéité formant une enveloppe externe étanche aux gaz d'échappement, une partie intermédiaire formant une isolation thermique, et des moyens pour raccorder les extrémités des parties interne et externe du flexible à la ligne d'échappement, flexible qui est caractérisé en ce que la partie mécanique interne du flexible est constituée par une pièce métallique tubulaire sous la forme d'un agrafé métallique double agrafage très lâche.

Selon une autre caractéristique du flexible selon l'invention, une extrémité au moins de l'agrafé métallique est évasée pour venir directement se raccorder à une tubulure de raccordement de la ligne d'échappement.

Un flexible selon l'invention présente également pour avantage de bien canaliser le flux de gaz d'échappement, de satisfaire aux contraintes dynamiques résultant de la vitesse élevée dudit flux de gaz, et de pouvoir subir des déformations mécaniques dans toutes les directions.

Avec un tel flexible de découplage, la ligne d'échappement en aval du flexible est beaucoup moins sollicitée et a une durée de vie plus longue.

D'autres avantages, caractéristiques et détails de l'invention ressortiront du complément de description qui va suivre en référence aux dessins annexés, donnés uniquement à titre d'exemple et dans lesquels :
- la figure 1 est une vue en coupe longitudinale d'un flexible de découplage selon l'invention suivant deux demi-vues de gauche et de droite pour illustrer deux modes de réalisation,
- la figure 2 est une vue du détail indiqué par la flèche II de la figure 1, et
- la figure 3 est une représentation graphique pour illustrer le résultat de tests de découplage qui ont été respectivement effectués sur un flexible selon l'invention et sur un flexible selon l'art antérieur.

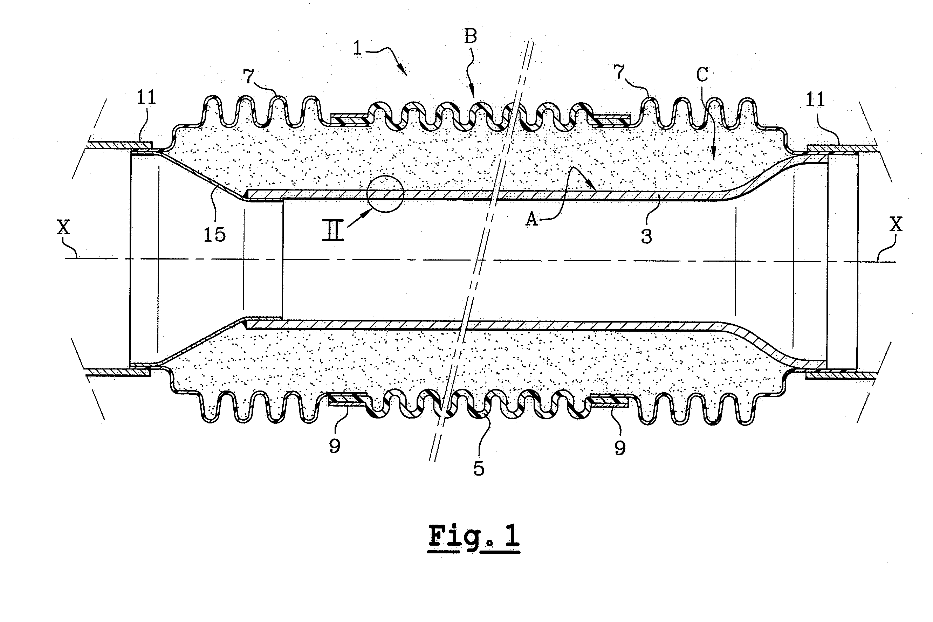

Le flexible de découplage 1 selon l'invention et tel qu'illustré sur la figure 1 présente une structure tubulaire d'axe X-X qui comprend notamment au moins une partie mécanique interne A destinée à assurer le guidage du flux des gaz d'échappement qui peut atteindre une vitesse de l'ordre de 100m/s, une partie étanchéité externe B destinée à assurer l'étanchéité aux gaz d'échappement, et une partie intermédiaire C destinée à assurer au moins une isolation thermique pour la partie externe B.

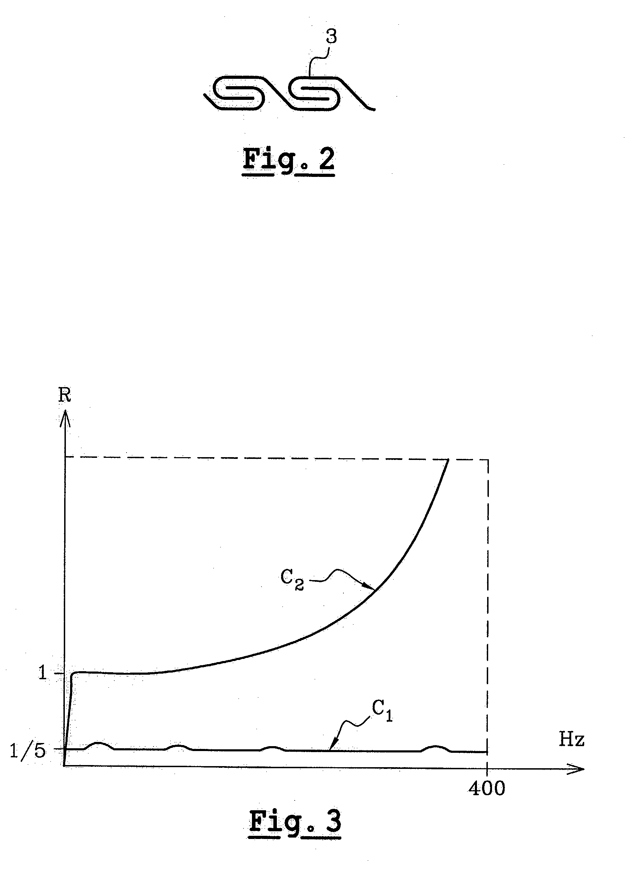

La partie tubulaire interne A du flexible de découplage 1 est une pièce métallique tubulaire sous la forme d'un agrafé 3 double agrafage très lâche du type de celui illustré à la figure 2 plutôt qu'un agrafé simple agrafage pour des raisons qui seront explicitées plus loin.

La partie étanchéité B du flexible de découplage 1 forme une enveloppe externe étanche qui se scinde en une zone centrale souple et deux zones d'extrémité rigides. A titre d'exemple, la zone centrale 5 est constituée par un soufflet en un matériau thermiquement résistant tel du silicone, et chaque zone d'extrémité est constituée par un tube onduleux 7 qui forme également des moyens de refroidissement pour augmenter la surface d'échange thermique du flexible 1 avec l'extérieur. D'une manière générale, ces tubes onduleux 7 ont des épaisseurs relativement faibles, de l'ordre de 0,3 à 0,6mm par exemple.

Pour réduire le nombre des pièces constitutives du flexible, chaque tube onduleux 7 présente les changements de diamètre nécessaires pour assurer son raccordement à la zone centrale 5 de l'enveloppe étanche d'une part et à la ligne d'échappement d'autre part. Le raccordement de chaque tube ondulé 7 à la zone centrale 5 s'effectue au moyen de colliers de serrage 9 par exemple, alors que son raccordement à un tronçon de tubulure 11 de la ligne d'échappement s'effectue par soudage par exemple.

La partie d'isolation thermique C est constituée par un matelas annulaire 13 fait en un matériau fibreux par exemple, qui pénètre à l'intérieur des deux tubes onduleux 7 pour s'étendre sensiblement sur toute la longueur du flexible. L'utilisation d'un agrafé 3 à double agrafage offre l'avantage de ne pas provoquer une usure du matelas isolant 13, alors qu'un agrafé à simple agrafage présenterait cet inconvénient par le fait qu'il aurait tendance à pincer ledit matelas.

Selon un premier mode de réalisation illustré sur la demi-vue de gauche de la figure 1, l'agrafé 3 se prolonge à chaque extrémité par un embout tubulaire métallique de liaison évasé 15 pour assurer le raccordement avec les tronçons tubulaires 11, les fixations étant assurées par soudage par exemple.

Selon un second mode de réalisation illustré sur la demi-vue de droite de la figure 1, l'agrafé 3 s'évase à chaque extrémité pour venir se raccorder directement aux tronçons tubulaires 11 de la ligne d'échappement.

En variante, on peut combiner les deux modes de réalisation précités, une extrémité de l'agrafé 3 se raccordant à la ligne d'échappement par un tronçon tubulaire, alors que son autre extrémité est évasée pour se raccorder directement à la ligne d'échappement.

Des tests de découplage ont été réalisés sur un banc d'essai en soumettant le flexible 5 selon l'invention à des sollicitations mécaniques sous la forme de petites vibrations d'une amplitude de l'ordre de 0,1mm et à des fréquences comprises entre 0 et 400Hz. La courbe C₁ illustrée sur la figure 3 montre que la raideur dynamique R du flexible 5 reste sensiblement constante, alors que la courbe C₂ pour un flexible ayant une structure interne rigide augmente avec la fréquence. Ces courbes montrent que le découplage obtenu avec un flexible selon l'invention est quasiment total, ce qui est notamment le but recherché par l'invention.

D'une manière générale, les dimensions du flexible et de ses éléments constitutifs ne sont pas figées et peuvent varier suivant l'encombrement réservé au flexible. Cependant, le diamètre intérieur de l'agrafé 3 ne doit pas être trop petit pour limiter les pertes de charges, et pas trop important pour que l'épaisseur du matelas isolant 13 soit suffisante pour limiter la transmission de chaleur vers l'enveloppe étanche 5 et 7.

## Revendications

1. Flexible de découplage destiné à être monté dans une ligne d'échappement d'un moteur de véhicule automobile, ce flexible (1) comprenant notamment une partie mécanique interne (A) assurant le guidage du flux des gaz d'échappement au travers du flexible, une partie étanchéité (B) formant une enveloppe externe étanche aux gaz d'échappement, une partie intermédiaire (C) formant une isolation thermique, et des moyens pour raccorder les extrémités des parties interne (A) et externe (B) du flexible (1) à la ligne d'échappement, **caractérisé en ce que** la partie mécanique interne (A) du flexible est constituée par une pièce métallique tubulaire sous la forme d'un agrafé métallique (3) à double agrafage très lâche.

2. Flexible de découplage selon la revendication 1, **caractérisé en ce qu'**une extrémité au moins de l'agrafé métallique (3) est évasée pour venir directement se raccorder à une tubulure (11) de la ligne d'échappement.

3. Flexible de découplage selon la revendication 1, **caractérisé en ce que** les deux extrémités de l'agrafé métallique (3) se raccordent à deux tubulures (11) de la ligne d'échappement au moyen de deux embouts de liaison (15), respectivement.

4. Flexible de découplage selon l'une quelconque des revendications 1 à 3, **caractérisé en ce que** la partie intermédiaire (C) formant l'isolation thermique est constituée par un matelas fibreux.
